# FASCICULE DE BREVET EUROPEEN

(11) **EP 2 034 692 B1**
(45) Date de publication et mention de la délivrance du brevet: **21.07.2010**
(21) Numéro de dépôt: 08155637.5
(22) Date de dépôt: 05.05.2008
(51) Int. Cl.: H04L 29/06, H04L 29/08

(54) **Serveur d'application pour réseau de communication, avec interface optimisée avec des serveurs de médias**
Anwendungsserver für Kommunikationsnetz mit optimierter Schnittstelle mit Medienserver
Application server for a communication network having optimised interface with media servers

(30) Priorité: 05.09.2007 FR 0757358
(43) Date de publication de la demande: 11.03.2009
(73) Titulaire: Alcatel Lucent, 75008 Paris (FR)
(72) Inventeur: Leygues, François, 75003 Paris (FR); Tombroff, Dimitri, 91300 Massy (FR)
(74) Mandataire: Chaffraix, Sylvain

(56) Documents cités:
- EP-A- 1 739 922
- US-A1- 2003 051 037
- US-A1- 2006 239 257

## Description

La présente invention concerne un serveur d'application pour un réseau de communication. Un tel réseau de communication peut notamment être conforme à l'architecture IMS, *Internet Protocol Multimedia Subsystem.*

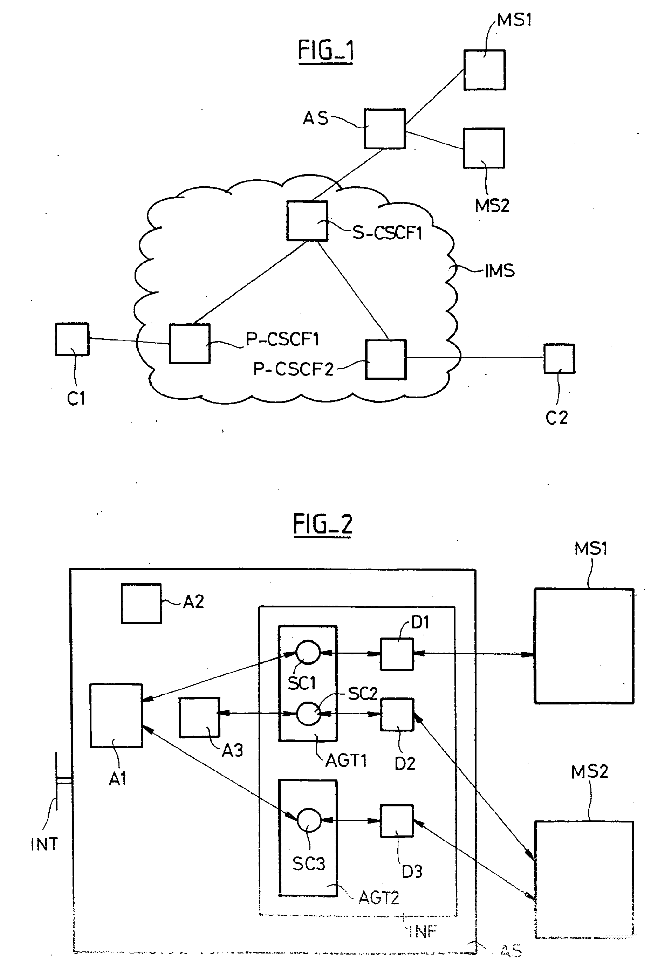

La figure 1 illustre une telle architecture IMS dans laquelle l'invention est susceptible de s'inscrire. Les serveurs d'application sont toutefois utilisés dans d'autres types d'architectures.
Sur la figure 1, deux clients de communication C1 et C2 sont connectés à une architecture de communication IMS, par l'intermédiaire de deux éléments fonctionnels de contrôle de session d'appel « de proximité », P-CSCF1 et P-CSCF2 respectivement. Eux-mêmes sont connectés à un élément fonctionnel « serveur », S-CSCF.
Ces éléments fonctionnels S-CSCF (pour *« Serving - Call Session Control Function* ») et P-CSCF (pour « *Proxy - Call Session Control Function* ») sont définis par les spécifications de l'architecture IMS des groupes de standardisations 3GPP et TISPAN.
Les sessions établies entre les deux clients de communication C1 et C2 sont typiquement gérées par l'élément fonctionnel S-CSCF. Certaines sessions peuvent nécessiter le recours à un serveur d'applications AS. Les serveurs d'applications permettent de rendre accessible au réseau de communication et aux différents clients un ensemble varié d'applications implémentant des services : gestion d'une conférence à plusieurs partis, accès à des annonces préenregistrées, accès à des documents multimédias, etc.

Ces serveurs d'applications sont susceptibles de faire appel à des serveurs de média, MS1, MS2.
Certains services nécessitent de façon inhérente de faire appel à des informations multimédias (vidéo à la demande, etc.) et d'autres peuvent nécessiter d'y faire appel occasionnellement. Il peut par exemple s'agir de jouer un fichier multimédia pour annoncer que le service n'est pas actuellement disponible, ou simplement faire patienter le client.
Le stockage et la gestion des fichiers multimédia sont généralement déportés sur ces serveurs multimédia afin de rendre l'architecture plus modulaire. Les serveurs d'applications AS créent donc, lorsque nécessaire, des sessions avec les serveurs multimédia MS1, MS2 appropriés.

Actuellement, il existe différentes sortes de serveurs multimédia, du fait d'une part de la pluralité des fabricants et des technologies, mais également du fait des différents types de média possibles (audio, vidéo... en différents formats, encodages...).
Aussi, les communications entre un serveur d'application AS et les serveurs multimédia MS sont diverses et rendent complexes la conception, le déploiement et la maintenance d'un serveur d'application.

US 2003/051037 décrit un serveur d'application pour réseau de communication.

Le but de la présente invention est de résoudre ce problème de la complexité des serveurs d'application.

Le serveur d'application selon l'invention comporte un ensemble d'applications susceptibles de communiquer avec des serveurs de média, dans le cadre d'une session de communication. Il est novateur en ce qu'il comporte en outre :
- Des objets de contexte de session, prévus pour mémoriser des informations relatives à des sessions de communication, et
- Des pilotes de gestion associés aux serveurs de média.
   Ces pilotes de gestion sont prévus
- pour s'enregistrer auprès d'un ou plusieurs des objets de contexte de session afin d'être notifiés de toute modification de valeur d'au moins une des informations au sein du ou des objets de contextes de session,
- pour traduire cette modification selon un protocole compris par le ou les serveurs de média auxquels les pilotes de gestion sont associés, et
- pour traduire toute notification reçue d'un serveur de média associé en une modification de la valeur d'une information d'un ou plusieurs objets de contexte de session.

Les objets de contexte de session peuvent éventuellement être répartis parmi une pluralité d'agents contenus dans le serveur d'applications.
Ils peuvent en outre être dupliqués sur des agents différents, afin d'assurer une tolérance au faute.

L'invention et ses avantages apparaîtront de façon plus claire dans la description qui va suive en liaison avec les figures annexées.
La figure 1, précédemment commentée, représente une architecture de communication IMS, dans laquelle l'invention est susceptible de s'inscrire.
La figure 2, schématise un serveur d'application selon l'invention.

Selon l'invention, un serveur d'applications comporte un ensemble d'applications implémentant des services et rendues accessibles aux clients et autres éléments d'un réseau de communication par une interface, préférentiellement standardisé. Cette interface peut être notamment conforme au protocole SIP (pour « *Session Initiation* Protocol ») tel que défini par le RFC 3260 de l'IETF (*Internet Engineering Task* Force).

Dans l'exemple représenté par la figure 2, le serveur d'application comporte 3 applications A1, A2 et A3, et une infrastructure INF.
Ces applications sont accessibles à des clients de communication ou à d'autres éléments du réseau de communication, non représentés, par une interface INT.
Typiquement cette interface INT est prévue pour émettre et recevoir des messages de signalisation conformes au protocole SIP, *Session Initiation Protocol*, ainsi que défini par le RFC3260 de l'IETF et par les autres RFC qui sont plus tard venus compléter le protocole initial.
Ces messages de signalisation peuvent notamment être des messages d'invitation « INVITE » ou d'autres messages de signalisation subséquents et appartenant à une même session de communication créé par le message d'invitation.
En fonction du service requis par le message d'invitation entrant, celui-ci est aiguillé vers une des applications A1, A2 ou A3.
Eventuellement, une même session peut être traitée par plusieurs applications.

Lorsqu'une application nécessite, pour le traitement d'une session de communication, les ressources d'un serveur de média, elle créé un objet de contexte de session au sein de l'infrastructure INF.
Il est important de distinguer la session de communication et la session multimédia. Toute session de communication créée entre le serveur d'application AS et un autre équipement du réseau de communique n'engendre pas nécessairement la création d'une session multimédia. Elle peut également nécessiter d'en créer plusieurs.
On appelle session multimédia l'ensemble des communications entre le serveur d'application AS et un serveur de média MS1, MS2, comprises entre un message de début de session et un message de terminaison.

Dans l'exemple illustré par la figure 2, l'application A1 nécessite l'utilisation de deux serveurs de média MS1 et MS2, et l'application A3 nécessite l'utilisation d'un seul serveur de média MS1. L'application A2 n'utilise pas de serveurs de média.
Pour utiliser les serveurs de média MS1 et MS2, l'application A1 créé deux objets de contexte de session, respectivement SC1 et SC3, au sein de l'infrastructure INF. L'application A2 créé quant à elle un objet de contexte de session SC2.
Ces objets de session de contexte peuvent n'être créés que pour une session multimédia et être détruit à la terminaison de celle-ci. Ils peuvent être répartis parmi une pluralité d'agents AGT1, AGT2 contenus dans l'infrastructure INF. Ces agents peuvent par exemple être eux-mêmes répartis sur des équipements distincts.

Selon une mise en oeuvre de l'invention, tous ou une partie des objets de contexte de session peuvent être dupliqués sur des agents différents, afin d'assurer une tolérance au faute. Ainsi, par exemple, des copies des objets de contexte de session SC1 et SC2 peuvent être déployées dans l'agent AGT2, et une copie de l'objet de contexte de session SC3 peut être déployée dans l'agent AGT3. Ces copies contiennent l'ensemble des informations mémorisées dans les objets originaux.
En fonctionnement normal, les copies sont non actives et leur comportement consiste à uniquement synchroniser les informations qu'elles contiennent avec celles des originaux. Lorsqu'un des agents ne fonctionne plus, les copies mémorisées dans l'agent survivant deviennent alors actives et gèrent les sessions multimédias.
Uniquement deux agents AGT1, AGT2 sont représentés dans l'exemple de la figure 2, mais il est bien évident que plus de deux agents peuvent être utilisés.

La répartition des objets de contexte de session et de leur copie peut être effectuée afin d'assurer une répartition de la charge des différents agents.

Cette infrastructure INF et l'ensemble des objets de contexte de session peut être une infrastructure Java. Il peut également s'agir d'une infrastructure CORBA, spécifiée par l'OMG (*Open Management Group*) ou toute d'autre infrastructure logicielle répartie.

Le contexte représente l'ensemble ou sensiblement l'ensemble des informations nécessaires à la session multimédia.
Il peut notamment s'agir d'informations contenues dans les messages de signalisation provenant de l'interface INT, des messages de signalisation provenant des serveurs de média MS1, MS2.
Il peut aussi s'agir d'informations internes, notamment élaborées à partir des informations provenant des messages de signalisation. Par exemple, des informations relatives au statut du serveur de média, du temps écoulé depuis le début d'une annonce jouée etc.

De cette façon, les applications n'ont pas à gérer la mémorisation des informations contextuelles. Cela permet une plus grande robustesse et tolérance aux pannes : une application peut subir une défaillance et à son redémarrage retrouver les informations mémorisées dans le ou les objets de contexte de session.
Egalement, cela facilite le développement et la maintenance des applications, puisqu'il devient dès lors inutile de se préoccuper de quelles informations doivent être mémorisés et de quelle façon.

Au cours d'une session multimédia, les applications peuvent modifier la valeur des informations mémorisées dans les objets de contexte de session. Ces modifications sont effectuées de façon transactionnelle, c'est à dire de sorte que les propriétés dites ACID soient respectées. On rappelle que propriétés ACID garantissent l'atomicité « A », la cohérence « C », l'isolation « 1 » et la durabilité « D ».

L'infrastructure INF comporte également des pilotes de gestion D1, D2, D3 qui sont associés aux serveurs de médias MS1, MS2. Sur l'exemple de la figure 2, le pilote de gestion D1 est associé au serveur de médias MS1, et les pilotes de gestion D2 et D3 sont associés au serveur de médias MS2.
Il est prévu qu'un pilote de gestion ne puisse être associé qu'à un seul serveur de médias ou bien à un seul type de serveurs de média.
Si un serveur de média ou un type de serveurs de média peut s'interfacer selon différents protocoles, il peut être prévu autant de pilote de gestion. Par exemple, un même serveur de média peut être associé à un premier pilote de gestion, propre au protocole SIP, et à un second pilote de gestion, propre au protocole SOAP (« *Simple Object Access Protocol* »).
Le document « *MSCML Protocol: The Key to Unlocking a New Generation of Multimedia SIP Services* » d'Eric Burger, publié par la société Cantata, décrit un protocole basé sur XML permettant la communication entre serveur de médias et serveur d'applications. Le serveur d'application peut également comporter un pilote conforme à ce protocole MSCML.
Il est possible d'ajouter des nouveaux pilotes au sein du serveur d'applications, afin de prendre en compte un nouveau protocole, ou de s'interfacer avec un nouveau serveur de média ne comprenant aucun des protocoles pour lesquels un pilote est déjà installé.

Les pilotes de gestion D1, D2, D3 sont prévus pour s'enregistrer auprès d'un ou de plusieurs objets de contexte de session SC1, SC2, SC3. Cet enregistrement leur permet d'être notifiés de toute modification de la valeur d'une information des objets de contexte de session.

Les pilotes de gestion D1, D2, D3 disposent en outre de moyens pour traduire cette modification dans un protocole compris par le serveur de média.
Inversement, ils disposent de moyens pour traduire les notifications reçus du serveur de média en une modification de valeur d'une information au sein de l'objet de contexte de session correspondant.
Les applications sont également enregistrés auprès des objets de contexte de session afin d'être alerté en ces cas de modifications.

Pour rendre l'invention plus claire, nous pouvons décrire un processus possible mis en oeuvre lorsque l'application A1, par exemple, veut déclencher une action auprès du serveur de média MS1.
Il peut par exemple s'agir d'augmenter la vitesse du média audio ou audio-vidéo joué par le serveur de média, de changer la langue de l'annonce, de choisir une musique à jouer etc.

Dans la description d'un exemple de fonctionnement, il est donc supposé que la session multimédia est déjà créée et qu'un objet de contexte de session CS1 a déjà été créé.
Une demande de changement de la musique à jouer est reçue par l'application A1 par l'interface INT. Elle provint typiquement d'un client de communication (un terminal), suite à une action de l'utilisateur.
L'application A1 établie une transaction avec l'objet de contexte de session CS1 pour modifier la valeur de l'information relative à la musique à jouer. Elle fixe sa nouvelle valeur et termine la transaction.
Le pilote de gestion D1 est enregistré auprès de l'objet de contexte de session CS1 et est alerté de cette modification. Il établi alors un message conforme pour lequel il est prévu. On suppose que dans cet exemple le serveur de média MS1 comprend le protocole SIP et donc que le pilote de gestion D1 est apte à comprendre et générer des messages conformes au protocole SIP.
La modification est alors traduite en un message SIP destiné à modifier la musique à jouer par le serveur de média MS1.

Un tel message SIP peut par exemple être conforme aux spécifications du RFC 4240 de l'IETF, intitulé « *Basic Network Media Services with SIP* ».

Lorsque le serveur de média MS1 a effectivement modifié le paramètre « musique à jouer », un message est renvoyé vers le pilote de gestion D1. Ce message est également conforme au protocole SIP. Il peut par exemple s'agir d'un message 200 OK.
Le pilote de gestion D1 établi une transaction avec l'objet de contexte de session CS1 afin de traduire ce message en une modification d'une valeur d'une information stockée dans l'objet. Il peut par exemple s'agir de modifier une information de statut indiquant que le serveur de média MS1 est désormais synchronisé avec la valeur de consigne.
L'application A1 qui est à l'écoute de l'objet de contexte de session CS1 est alors informée de cette modification.

Par conséquent, dans les deux sens, on réalise bien une transmission rapide des événements et des informations de bout en bout.

A la fin de la session multimédia, les objets de contexte de session peuvent être détruits.

## Revendications

1. Serveur d'applications pour réseau de communication, comportant un ensemble d'applications susceptibles de communiquer avec des serveurs de média, dans le cadre d'une session de communication,
comportant outre
- Des objets de contexte de session, prévus pour mémoriser des informations relatives à des sessions de communication,
- Des pilotes de gestion associés auxdits serveurs de média, prévus pour s'enregistrer auprès d'un ou plusieurs des objets de contexte de session afin d'être notifié de toute modification de valeur d'au moins une desdites informations au sein desdits un ou plusieurs objets de contextes de session, pour traduire ladite modification selon un protocole compris par le ou les serveurs de média auxquels lesdits pilotes de gestion sont associés, et pour traduire toute notification reçue d'un serveur de média associé en une modification de la valeur d'une information d'un ou plusieurs objets de contexte de session.

2. Serveur d'application selon la revendication précédente dans lequel lesdits objets de contexte de session sont réparties parmi une pluralité d'agents contenus dans ledit serveur d'applications.

3. Serveur d'applications selon la revendication précédente, dans lequel lesdits objets de contexte de session sont dupliqués sur des agents différents, afin d'assurer une tolérance au faute.

## Claims

1. Applications server for communication network, comprising a set of applications liable to communicate with media servers, in the context of a communication session,
also comprising
- Session context objects, intended to store in memory information relating to communication sessions,
- Management pilots associated with said media servers, intended to register with one or more of the session context objects in order to be notified of any modification to the value of at least one of said items of information within said one or more session context objects, to translate said modification according to a protocol comprised by the media server(s) with which said management pilots are associated, and to translate any notification received from an associated media server into a modification of the value of an item of information of one or more session context objects.

2. Application server according to the previous claim in which said session context objects are distributed among a plurality of agents contained in said applications server.

3. Applications server according to the previous claim, in which said session context objects are duplicated on different agents, in order to ensure fault tolerance.

## Patentansprüche

1. Anwendungsserver für ein Kommunikationsnetz, umfassend eine Gesamtheit von Anwendungen, die dazu geeignet sind, im Rahmen einer Kommtinikationssitzung mit Medienservern zu kommunizieren,
weiterhin umfassend:
- Sitzungskontextobjekte, welche dazu bestimmt sind, informationen, die sich auf Kommunikationssitzungen beziehen, zu speichern,
- Verwaltungstreiber, welche den besagten Medienservern zugeordnet und dafür vorgesehen sind, sich bei einem oder bei mehreren Sitzungskontextobjekten zu registrieren, um über jede Wertänderung mindestens einer der besagten Informationen innerhalb des besagten einen oder der besagten mehreren Sitzungskontextobjekte eine Mitteilung zu erhalten, um die besagte Änderung gemäß einem Protokoll, welches von dem oder den Medienservern, denen die besagten Verwaltungstreiber zugeordnet sind, verstanden werden, zu übersetzen, und um jede von einem zugeordneten Mediaserver empfangene Mitteilung in eine Änderung des Wertes einer information eines oder mehrerer Sitzungskontextobjekte zu übersetzen.

2. Anwendungsserver nach dem vorstehenden Anspruch, wobei die besagten Sitzungskontextobjekte auf eine Mehrzahl von in dem besagten Anwendungsserver enthaltenen Agenten verteilt werden.

3. Anwendungsserver nach dem vorstehenden Anspruch, wobei die besagten Sitzungskontextobjekte auf verschiedene Agenten dupliziert werden, um eine Fehlertoleranz zu gewährleisten.
